# EUROPEAN PATENT APPLICATION

(11) **EP 4 745 658 A1**
(43) Date of publication of application: **20.05.2026**
(21) Application number: 24843024.1
(22) Date of filing: 09.07.2024
(51) Int. Cl.: G02F 1/155, G02F 1/15, G02F 1/1523, G02F 1/1524

(54) **ELECTROCHROMIC ELEMENT FOR LIGHT CONTROL DEVICE, METHOD FOR MANUFACTURING ELECTROCHROMIC ELEMENT FOR LIGHT CONTROL DEVICE, TRANSPARENT ELECTRODE LAYER, AND METHOD FOR MANUFACTURING TRANSPARENT ELECTRODE LAYER**

(30) Priority: 14.07.2023 JP 2023115853
(71) Applicant: National Institute of Advanced Industrial Science and Technology, Chiyoda-ku Tokyo 100-8921 (JP)
(72) Inventor: TAJIMA Kazuki, Tsukuba-shi, Ibaraki 305-8565 (JP); NOMOTO Junichi, Tsukuba-shi, Ibaraki 305-8565 (JP)
(74) Representative: Dehns
(86) International application number: PCT/JP2024/024824
(87) International publication number: WO 2025/018232

(57) **Abstract**

An electrochromic element for a light control device, having a multilayer structure including a first electrochromic layer, an electrolyte layer, and a second electrochromic layer in this order between a first transparent electrode layer and a second transparent electrode layer on a transparent substrate. The first transparent electrode layer and the second transparent electrode layer include at least one of a single-component oxide of indium (In) and an oxide of indium (In) including one or multiple types selected from the group consisting of Ce, W, Ti, Zr, and Mo, the carrier mobility is 70 cm²/V·s or more, and the transmittance in a near-infrared band (800 to 2500 nm) is 75% or more.

## Description

### Technical Field

The present invention relates to an electrochromic element for a light control device that changes its color by an electrochemical reaction and a method for manufacturing the same, and particularly, to an electrochromic element for a light control device that provides a color change with high contrast in a near-infrared band (wavelength: 800 to 2500 nm) and a method for manufacturing the same. In addition, the present invention relates to a transparent electrode layer used for such an electrochromic element for a light control device, and a method for manufacturing the transparent electrode layer.

### Background Art

A light control window using an electrochromic element is desirable to control transmittance and shielding of heat rays (infrared rays) included in sunlight, and to reduce an air conditioning load by, for example, adjusting the amount of heat taken into a room. Herein, a transparent electrode composed of indium tin oxide (ITO) that is commonly used for an electrochromic element has low transmittance in a near-infrared to mid-infrared band (wavelength: 800 to 4000 nm), and thus is not suitable for application to control of transmittance and shielding of heat rays.

Meanwhile, when light is incident on a substance, a part of the light is reflected or absorbed inside the substance, and the rest is transmitted. ITO is an n-type degenerate semiconductor, and thus electrons as carriers contribute to electrical conduction. Herein, the carrier electrons reflect and absorb light having a certain wavelength or more. When N is a carrier density, e is an elementary charge, m* is an effective mass of an electron, and ε is a dielectric constant, the optical wavelength is defined by a plasma frequency: wₚ = √(Ne²/(m*ε)), depends on the carrier density, and is generally located in a near infrared region. That is, in a normal ITO thin film, the carrier density is approximately 1 × 10²¹ cm⁻³, and the resistivity is as significantly low as 2 × 10⁻⁴ Ω·cm, and thus infrared rays of 1000 nm or more are absorbed or reflected and hardly transmitted.

On the other hand, for example, Patent Literature 1 discloses an electrochromic element capable of greatly changing the transmittance not only in the visible light region but also in the infrared light region by controlling the carrier electron density of a transparent electrode (conductive film). Controlling the carrier electron density of at least one of the two opposing transparent electrodes to be as low as 1 to 4 × 10²⁰ cm⁻³ from the balance with the response speed of the transmittance control makes it possible to greatly change not only the transmittance in the visible light region but also the transmittance in the infrared light region.

### Citation List

### Patent Literature

Patent Literature 1: JP 2008-107587 A

### Summary of Invention

### Technical Problem

High speed response to light control for the electrochromic element for a light control device should require an increased film thickness to enhance the conductivity of the transparent electrode. However, the transparent electrode such as ITO results in a lower transmittance in the near-infrared band. Herein, the resistivity of the substance is defined by 1/(Neµ) when µ is mobility, and is inversely proportional to the product of the carrier electron density N and the mobility µ, and thus, as described in Patent Literature 1, the carrier electron density is lowered to increase the transmittance in the infrared light region, resulting in an increased resistivity, and difficult to achieve high speed response to light control.

The present invention has been made in view of the above circumstances, and an object thereof is to provide an electrochromic element for a light control device that provides a color change in a near-infrared to mid-infrared band (wavelength 800 to 4000 nm) and provides a color change with high contrast particularly in a near-infrared band (wavelength 800 to 2500 nm), a method for manufacturing the electrochromic element, a transparent electrode layer, and a method for manufacturing the transparent electrode layer.

### Solution to Problem

The present inventors have studied use of a known zinc oxide-based transparent electrode layer such as aluminum-doped zinc oxide or gallium-doped zinc oxide instead of ITO, but the adhesion to the electrochromic layer is low, failing to achieve sufficient functionality. As a result of intensive studies, the present inventors have found that a transparent electrode film having high carrier mobility and high solar transmittance can be obtained by forming a precursor film composed of indium oxide including an amorphous phase or an amorphous phase component in a larger amount than a polycrystalline component, and then performing crystallization by light irradiation at a temperature of 100°C or less or heat treatment at a temperature more than 150°C in the air or in a vacuum. Such a transparent electrode film provides an electrochromic element that is chemically stable when combined with an electrochromic layer composed of a transition metal oxide and an electrochromic layer including a metal cyanide complex, stably exhibits a color change in a mid-infrared band (wavelength 800 to 4000 nm), and stably exhibits a color change with high contrast in a near-infrared band (wavelength 800 to 2500 nm).

In addition, the transparent electrode layer can be polycrystallized by light irradiation, thus making it possible to further use a low heat resistant substrate having flexibility and limited heating such as a resin sheet, and making it possible to develop various applications by various electrochromic elements according to needs.
[1] An electrochromic element for a light control device, comprising a multilayer structure including: a first electrochromic layer; an electrolyte layer; and a second electrochromic layer, in this order between a first transparent electrode layer on a first transparent substrate and a second transparent electrode layer on a second transparent substrate, wherein
   the first transparent electrode layer and the second transparent electrode layer include at least one of a single-component oxide of indium (In) and an oxide of indium (In) including one or multiple types selected from the group consisting of Ce, W, Ti, Zr, and Mo, and have a carrier mobility of 70 cm²/V·s or more and a transmittance of 75% or more in a near-infrared band (800 to 2500 nm).
   Such a feature can provide an electrochromic element for a light control device that provides a color change in a mid-infrared band and provides a color change with high contrast in a near-infrared band.
[2] In the invention of [1], the first transparent electrode layer and the second transparent electrode layer may include a crystal phase obtained by crystallizing an amorphous phase. Such a feature can provide an electrochromic element for a light control device that stably provides a color change in a mid-infrared band and provides a color change with high contrast in a near-infrared band.
[3] In the invention of [1] or [2], the first transparent substrate and the second transparent substrate may be resin sheets. Such a feature can provide an electrochromic element for a light control device having flexibility.
[4] In the invention of any one of [1] to [3], the electrolyte layer may include any one or more of bis(trifluoromethanesulfonyl)imide, lithium bis(trifluoromethanesulfonyl)imide, potassium bis(trifluoromethanesulfonyl)imide, and sodium bis(trifluoromethanesulfonyl)imide, and one or more organic solvents of propylene carbonate, ethylene carbonate, and diethyl carbonate, and may be solidified with any one or more of an acrylic resin and an epoxy resin, in which the first electrochromic layer includes a transition metal oxide, the second electrochromic layer includes a metal cyanide complex, and color change is enabled by application of a voltage to the first transparent electrode layer and the second transparent electrode layer.
[5] In the invention of [4], the transition metal oxide may include at least one or more of tungsten oxide, molybdenum oxide, niobium oxide, vanadium oxide, and titanium oxide.
[6] In the invention of [4] or [5], the metal cyanide complex may be a Prussian blue type metal complex composed of one or two or more selected from the group represented by the general formula of AₓM[M'(CN)₆]_{y}·zH₂O, when A represents a cation including an atom selected from the group consisting of hydrogen, lithium, sodium, potassium, rubidium, cesium and ammonium, M represents a metal atom selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium, M' represents a metal atom selected from the group consisting of vanadium, chromium, molybdenum, tungsten, manganese, iron, ruthenium, cobalt, nickel, platinum, and copper, x represents a rational number of 0 to 3, y represents a rational number of 0.3 to 1.5, and z represents a rational number of 0 to 30. Such a feature can provide an electrochromic element for a light control device that stably provides a color change in a mid-infrared band and provides a color change with high contrast in a near-infrared band.
[7] The present invention is a transparent electrode layer used in an electrochromic element for a light control device, in which the transparent electrode layer is formed on a transparent substrate, the transparent electrode layer includes at least one of a single-component oxide of indium (In) and an oxide of indium (In) including one or multiple types selected from the group consisting of Ce, W, Ti, Zr, and Mo, a carrier mobility is 70 cm²/V·s or more, and a transmittance in a near-infrared band (800 to 2500 nm) is 75% or more. Such a feature can provide an electrochromic element for a light control device that provides a color change in a mid-infrared band and provides a color change with high contrast in a near-infrared band.
[8] A method for manufacturing an electrochromic element for a light control device, the electrochromic element comprising a multilayer structure including:a first electrochromic layer; an electrolyte layer; and a second electrochromic layer, in this order between a first transparent electrode layer on a first transparent substrate and a second transparent electrode layer on a second transparent substrate,
   the method including:
   a step of forming the first transparent electrode layer on the first transparent substrate and/or an electrode formation step of forming the second transparent electrode layer on the second transparent substrate, wherein
   the electrode formation step includes:
      a first step of forming a precursor film including an amorphous phase including at least one of a single-component oxide of indium (In) and an oxide of indium (In) including one or multiple types selected from Ce, W, Ti, Zr, and Mo on the first transparent substrate and/or the second transparent substrate; and
      a second step of crystallizing the precursor film to form the first transparent electrode layer and/or the second transparent electrode layer having a carrier mobility of 70 cm²/V·s or more and a transmittance of 75% or more in a near-infrared band (800 to 2500 nm).
   Such a feature can provide an electrochromic element for a light control device that provides a color change in a mid-infrared band and provides a color change with high contrast in a near-infrared band.
[9] In the invention of [8], the second step includes a step of irradiating the precursor film with light.
[10] In the invention of [9] or [8], the crystallization step may be a step of performing a treatment at a temperature of 100°C or less.
[11] In the invention of [9] or [10], the first transparent substrate and the second transparent substrate may be resin sheets. Such a feature can provide an electrochromic element for a light control device having flexibility by a simple step.
[12] In the invention of any one of [8] to [11], the electrolyte layer may include any one or more of bis(trifluoromethanesulfonyl)imide, lithium bis(trifluoromethanesulfonyl)imide, potassium bis(trifluoromethanesulfonyl)imide, and sodium bis(trifluoromethanesulfonyl)imide, and one or more organic solvents of propylene carbonate, ethylene carbonate, and diethyl carbonate, and may be solidified with any one or more of an acrylic resin and an epoxy resin; the first electrochromic layer includes a transition metal oxide; the second electrochromic layer includes a metal cyanide complex; and the electrochromic element for a light control device allows color change by application of a voltage to the first transparent electrode layer and the second transparent electrode layer.
[13] In the invention of any one of [8] to [12], a light aging treatment step of forming the multilayer structure and then irradiating the multilayer structure with light may be further included. Such a feature can stably and reliably provide an electrochromic element for a light control device that provides a color change in a mid-infrared band and provides a color change with high contrast in a near-infrared band.
[14] A method for manufacturing a transparent electrode layer used in an electrochromic element for a light control device, the method including an electrode formation step of forming a transparent electrode layer on a transparent substrate, in which the electrode formation step includes a first step of forming, on the transparent substrate, a precursor film having an amorphous phase including at least one of a single-component oxide of indium (In) and an oxide of indium (In) including one or multiple types selected from the group consisting of Ce, W, Ti, Zr, and Mo; and a second step of crystallizing the precursor film to form the transparent electrode layer having a carrier mobility of 70 cm²/V·s or more and a transmittance of 75% or more in a near-infrared band (800 to 2500 nm).

Such a feature can provide an electrochromic element for a light control device that provides a color change in a mid-infrared band and provides a color change with high contrast in a near-infrared band.

### Brief Description of Drawings

Fig. 1 is a cross-sectional view illustrating an electrochromic element according to the present invention.
Fig. 2(a) is a graph showing a transmittance spectrum and Fig. 2(b) is a graph showing reflectance spectrum in each transparent electrode layer.
Fig. 3 is a list of surface roughness of each transparent electrode layer.
Fig. 4 is a set of graphs showing a water contact angle for each treatment of each transparent electrode layer.
Fig. 5 is a set of graphs showing a spectroscopic spectrum when a WO₃ thin film (multilayer film A) or a PB thin film (multilayer film B) is provided to each transparent electrode layer and a spectroscopic spectrum without a thin film (only substrate).
Fig. 6 is a table summarizing various spectroscopic characteristics.
Fig. 7(a) is a graph showing a cyclic voltammogram of an ECD, and Fig. 7(b) is a graph showing a temporal change in transmittance regarding a color change reaction.
Fig. 8(a) is a graph showing electrochemical characteristics by chronocoulometry of the ECD, and Fig. 8(b) is a graph showing a change in transmittance.
Fig. 9 is a set of graphs showing optical spectral changes of transmittance and reflectance of each of a bleaching reaction and a coloring reaction of the ECD.
Fig. 10 is a table summarizing various spectroscopic characteristics of the ECD.
Fig. 11 is a graph showing a temporal characteristic of an optical spectral change (bleached-state transmittance) of the ECD.
Fig. 12 is a graph showing optical characteristics (bleached-state transmittance) in a mid-infrared band of the ECD measured using Fourier transform infrared spectroscopy.

### Description of Embodiments

Hereinafter, an electrochromic element (ECD) according to one embodiment of the present invention will be described in detail.

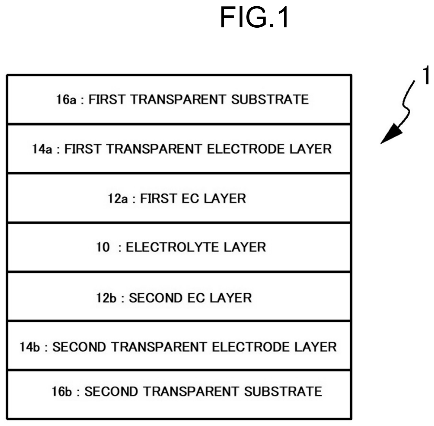

As shown in Fig. 1, an electrochromic element (ECD) 1 has a multilayer structure using a transition metal oxide and a metal cyanide complex as an electrochromic material (EC material). That is, there are included a first electrochromic (EC) layer 12a including a transition metal oxide, a second electrochromic (EC) layer 12b including a metal cyanide complex, an electrolyte layer 10 clamped therebetween, and a first transparent electrode layer 14a and second transparent electrode layer 14b respectively connecting to a first EC layer 12a and a second EC layer 12b from the outside and containing indium oxide (In₂O₃) as a main component. Further, a first transparent substrate 16a and a second transparent substrate 16b composed of a transparent material such as resin or glass are provided outside the first transparent electrode layer 14a and the second transparent electrode layer 14b, respectively. That is, the first transparent substrate 16a, the first transparent electrode layer 14a, the first EC layer 12a, the electrolyte layer 10, the second EC layer 12b, the second transparent electrode layer 14b, and the second transparent substrate 16b are stacked in this order. In the following description, when it is not necessary to distinguish the first transparent electrode layer 14a from the second transparent electrode layer 14b, they are referred to as transparent electrode layers, and when it is not necessary to distinguish the first transparent substrate 16a from the second transparent substrate 16b, they are referred to as transparent substrates. As understood from the above description, the electrochromic element for a light control device according to the present embodiment has a multilayer structure including a first electrochromic layer, an electrolyte layer, and a second electrochromic layer in this order between a first transparent electrode layer on a first transparent substrate and a second transparent electrode layer on a second transparent substrate.

The electrolyte layer 10, the first EC layer 12a, and the second EC layer 12b combined with the first transparent electrode layer 14a and the second transparent electrode layer 14b containing indium oxide (In₂O₃) as a main component preferably have a known structure disclosed in, for example, JP 2018-185424 A.

That is, the transition metal oxide of the first EC layer 12a is a material that allows color change by the electrolyte layer 10 as described later, and in particular, is a material that reverses the reaction of coloring or bleaching in an oxidized state and a reduced state with respect to the second EC layer 12b. Specifically, as the transition metal oxide of the first EC layer 12a, for example, tungsten oxide, molybdenum oxide, niobium oxide, vanadium oxide, titanium oxide, and the like can be used, and it is preferable to include at least one of them. The transition metal oxide is preferably included in an amount of 50 mass% or more in the first EC layer 12a.

As the metal cyanide complex of the second EC layer 12b, a Prussian blue type metal complex can be used, but another material may be used as long as it reversibly causes electrochemical oxidation-reduction, and is a material that reverses the coloring and bleaching reactions in the oxidized state and the reduced state with respect to the first EC layer 12a. The metal cyanide complex is preferably included in an amount of 50 mass% or more in the second EC layer 12b.

When the metal cyanide complex is used as the EC material, the manufacturing method is commonly to form a thin film made of the EC material on the second transparent electrode layer 14b and to use this thin film as the EC layer. However, the method for manufacturing the EC layer is not limited as long as the intended color change can be electrochemically achieved. For example, the EC layer may be formed by dispersing a metal cyanide complex in the electrolyte in contact with the second transparent electrode layer 14b.

The Prussian blue type metal complex has a composition represented by a general formula of AₓM[M'(CN)₆]_{y}·zH₂O. In addition, when M and M' are identified, the metal complex is referred to as a M-M' cyanide complex. For example, when M = zinc and M' = iron, the metal complex is referred to as a zinc-iron cyanide complex.

The composition of the metal cyanide complex can be selected according to the required color change behavior. The metal atom M is preferably a metal atom selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium, and more preferably a metal atom selected from the group consisting of vanadium, chromium, manganese, iron, ruthenium, cobalt, nickel, copper, and zinc. Further, the metal atom M is particularly preferably a metal atom selected from the group consisting of manganese, iron, cobalt, nickel, copper, and zinc.

In addition, the metal atom M' is preferably a metal atom selected from the group consisting of vanadium, chromium, molybdenum, tungsten, manganese, iron, ruthenium, cobalt, nickel, platinum, and copper, and more preferably a metal atom selected from the group consisting of manganese, iron, ruthenium, cobalt, and platinum. Further, the metal atom M' is particularly preferably a metal atom selected from the group consisting of iron and cobalt.

A is an atom selected from the group consisting of hydrogen, lithium, sodium, potassium, rubidium, cesium, and ammonium, which is ionized from the metal cyanide complex to be used and becomes a cation.

As the Prussian blue type metal cyanide complex, those having one or two or more of compositions selected from the above general formula including a combination of A, M, and M' can be used in mixture. In addition, materials that do not appear in the composition, such as other atoms, may be included as impurities.

In general, a desirable particle size of the metal cyanide complex is preferably small. That is, from the viewpoint of the electrochemical response speed, it is preferable to increase the specific surface area by reducing the particle size. In addition, from the viewpoint of forming a smooth thin film, it is preferable to reduce the particle size of the metal cyanide complex. Therefore, nano particles are preferable, and the primary particle size of the metal cyanide complex is preferably 500 nm or less, more preferably 300 nm or less, and particularly preferably 100 nm or less. On the other hand, the lower limit of the primary particle size of the metal cyanide complex is not limited, but it is practical that the primary particle size is 4 nm or more. Herein, the primary particle size refers to the diameter of the primary particle, and for example, the circle equivalent diameter of the primary particle can be derived from the half-value width of the peak of powder X-ray diffraction analysis. In addition, when a ligand or the like is adsorbed on the particle surface, the primary particle size is derived as a primary particle except for the ligand.

The first transparent electrode layer 14a and the second transparent electrode layer 14b of the present invention have carrier mobility of 70 cm²/V·s or more, and transmittance in a near-infrared band (800 to 2500 nm) of 75% or more. From the viewpoint of further low resistivity, the carrier mobility is preferably 80 cm²/V·s or more, more preferably 90 cm²/V·s or more, still more preferably 100 cm²/V·s or more, and particularly preferably 110 cm²/V·s or more. In addition, the transmittance in the near-infrared band (800 to 2500 nm) is more preferably 77% or more, still more preferably 80% or more. The carrier mobility can be obtained by performing Hall effect measurement. The transmittance in the near-infrared band (800 to 2500 nm) can be obtained from a transmittance spectrum measured by a spectrophotometer. The upper limit value of the carrier mobility and the upper limit value of the transmittance in the near-infrared band (800 to 2500 nm) are not particularly limited.

The material constituting the transparent electrode layer (14a, 14b) is not limited as long as it is a conductive material and does not cause deterioration such as corrosion to such an extent that it practically causes a problem when used as an electrochemical element. In particular, the transparent electrode layer including indium oxide exhibits high transmittance in the near-infrared band (wavelength 800 to 2500 nm), and can be used in an element to improve the ability to control the amount of sunlight taken in the near-infrared band.

Hereinafter, a step of forming a transparent electrode layer (hereinafter referred to as an "electrode formation step") will be described in detail. In the electrode formation step, a transparent electrode layer is formed on a transparent substrate. Specifically, the electrode formation step includes a first step and a second step.

The transparent substrate is preferably formed of, for example, a transparent material having a transmittance of 90% or more in a near-infrared band (800 to 2500 nm). Examples of such a material include, as a polymer material, acrylic resin, polyester (polyethylene terephthalate (PET), polyethylene naphthalate (PEN)), polyacrylonitrile, polystyrene, liquid crystal polymer (LCP), polyetherimide (PEI), and polycarbonate. The transparent substrate is preferably a resin sheet.

The first step is, for example, a step of forming a precursor film having an amorphous phase on a transparent substrate by physical vapor deposition using a target including an oxide of indium (In). The precursor film having an amorphous phase may include a larger amount of the amorphous phase component than the polycrystalline component, and does not need to be entirely composed of the amorphous phase. Specifically, the amorphous phase component relative to the polycrystalline component (amorphous phase component/polycrystalline component) may be larger than 1. For the amorphous phase component/polycrystalline component, the amorphous phase component/polycrystalline component within the range of an electron microscope observation image can be obtained in combination of, for example, crystal orientation analysis by backscattered electron diffraction (EBSD).

For example, when physical vapor deposition such as a sputtering method is used, the target is preferably composed of a material containing indium oxide (In₂O₃) as a main component. The term "containing indium oxide (In₂O₃) as a main component" means that 97 mass% or more of the target is composed of indium oxide. In addition, indium oxide (In₂O₃) may include other elements as a doping component. For example, indium oxide may include at least one or more selected from the group consisting of Ce, W, Ti, Zr, and Mo as a doping component. Specific examples thereof include indium-cerium (ICeO) oxide, indium-tungsten (IWO) oxide, indium-titanium (ITiO) oxide, indium-zirconium (IZrO) oxide, and indium-molybdenum (IMoO) oxide. The target used in the first step includes at least one of a single-component oxide of indium (In) and an oxide of indium (In) including one or multiple types selected from the group consisting of Ce, W, Ti, Zr, and Mo. In the present embodiment, the expression "indium oxide" includes both the case of being a single-component oxide of indium (In) and the case of being an oxide of indium (In) containing one or multiple types selected from the group consisting of Ce, W, Ti, Zr, and Mo.

However, the (film formation) method for forming the precursor in the first step is not particularly limited, and examples thereof include: a physical vapor deposition method (PVD method) such as a vacuum vapor deposition method, a direct current magnetron sputtering method, a high frequency magnetron sputtering method, a high frequency superposition direct current magnetron sputtering method, and an ion plating method; a chemical vapor deposition method (CVD method) in which raw materials are reacted and deposited; and application methods such as a spraying method, a spin coating method, a dip coating method, and a screen printing method. In the first step, regardless of the film formation method of a precursor film, a precursor film including an amorphous phase including at least one of a single-component oxide of indium (In) and an oxide of indium (In) including one or multiple types selected from the group consisting of Ce, W, Ti, Zr, and Mo may be formed on a transparent substrate.

The second step is a step of crystallizing the precursor film formed in the first step to form a transparent electrode layer having a carrier mobility of 70 cm²/V·s or more and a transmittance of 75% or more in a near-infrared band (800 to 2500 nm). The transparent electrode layer is mainly composed of a crystal phase, but it is also assumed that a phase other than the crystal phase is included in a trace amount (for example, 10 mass% or less).

In the second step of the present embodiment, a precursor film of a transparent electrode layer having an amorphous phase formed on a transparent substrate is heated and/or irradiated with light to grow the crystal.

The heating temperature for heating the precursor film of the transparent electrode layer is preferably 150°C or more, and more preferably 170°C or more. The atmosphere during heating is not particularly limited, and may be any of air, vacuum, oxygen gas, nitrogen gas, rare gas, hydrogen, or a mixed atmosphere thereof. The atmosphere gas may be in an air flow using a tubular furnace or the like, or may be in a chamber without a flow.

When the precursor film of the transparent electrode layer is irradiated with light, heating may be performed to such an extent that the transparent substrate is not deteriorated, and a temperature of room temperature or more and 100°C or less is suitably used. This also allows use of a low heat resistant transparent substrate having flexibility and limited heating such as a resin sheet, and allows use as an optical member having flexibility. In addition, the light irradiation direction is not particularly limited, but it is preferable to irradiate the laminate composed of the transparent substrate and the layer configured by the precursor film of the transparent electrode layer with light from the precursor film side.

The light irradiated onto the precursor film is not particularly limited, and for example, an ArF excimer laser having a wavelength of 193 nm, a KrF excimer laser having a wavelength of 248 nm, a XeCl excimer laser having a wavelength of 308 nm, an ultraviolet ray, visible light, or an infrared ray can be used. Among these, an ultraviolet ray including an excimer laser is preferable from the viewpoint that the energy of photons is high and the precursor film can accelerate crystallization by absorbing the energy of light. The light source for emitting light is not particularly limited, and for example, an excimer lamp, an excimer laser, a YAG laser, a dye laser, a femtosecond laser, a high pressure mercury lamp, a low pressure mercury lamp, a microwave excitation metal halide lamp, a microwave excitation mercury lamp, or a flash lamp can be used.

The intensity of light irradiated onto the precursor film is preferably 20 mJ/cm² or more, and more preferably 30 mJ/cm² or more. The irradiation intensity of light is 20 mJ/cm² or more, sufficiently promoting crystallization of the transparent electrode layer.

The atmosphere for irradiating the precursor film with light is not particularly limited, and may be any of air, vacuum, oxygen gas, nitrogen gas, rare gas, hydrogen, or a mixed atmosphere thereof. The atmosphere gas may be in an air flow using a tubular furnace or the like, or may be in a chamber without a flow.

The transparent electrode layer obtained in the second step contains indium oxide (In₂O₃), which is an oxide of indium (In), as a main component. The term "containing indium oxide (In₂O₃) as a main component" means that 97 mass% or more of the entire transparent electrode layer is composed of indium oxide. The indium oxide (In₂O₃) included in the transparent electrode layer includes at least one of a single-component oxide of indium (In) and an oxide of indium (In) including one or multiple types selected from the group consisting of Ce, W, Ti, Zr, and Mo, similarly to the material of the target described above. In addition, the transparent electrode layer may further contain hydrogen in addition to a metal oxide such as indium oxide. This is because, for example, hydrogen exists in the chamber during film formation and may be incorporated into the transparent electrode layer. In addition, impurities included in the raw material pellet or the target may be included in the transparent electrode layer as inevitable impurities.

The transparent electrode layers 14a and 14b are commonly smooth plate-shaped bodies, but are not limited to the plate-shaped bodies. In particular, increasing the contact area with the EC layers 12a and 12b leads to an improvement in response speed, and thus the smoothness of the transparent electrode layers 14a and 14b may be intentionally lowered. For example, a conductive material may be attached to the smooth surfaces of the transparent electrode layers 14a and 14b to provide irregularities. Further, another material may be added to the transparent electrode layers 14a and 14b for the purpose of improving adhesion with the EC layers 12a and 12b or for the purpose of avoiding corrosion. In addition, conduction may be obtained between the EC layer 12a and the transparent electrode layer 14a, and another material such as an insulating material may be provided on a surface of the transparent electrode layer 14a on a side opposite to the EC layer 12a. Similarly, conduction may be obtained between the EC layer 12b and the transparent electrode layer 14b, and another material such as an insulating material may be provided on a surface of the transparent electrode layer 14b on a side opposite to the EC layer 12b.

Hereinafter, characteristics of the transparent electrode layer (14a, 14b) formed by the above electrode formation step will be described in detail.

The contact angle when the surface of the transparent electrode layer (14a, 14b) is hydrophilized is, for example, 40° or less, preferably 30° or less, and more preferably 20° or less. The lower limit of the contact angle is not particularly limited, but is, for example, 10° or more.

As the treatment for hydrophilizing the surface of the transparent electrode layer, plasma irradiation (plasma treatment) or ultraviolet irradiation (UV treatment) is employed. In the case of UV treatment, for example, a UV-LED having a short wavelength of 365 nm, a low pressure mercury lamp, a high pressure mercury lamp, or the like is suitably used. In the case of the plasma treatment, treatment by introduction of argon, oxygen gas, or the like is conceivable, but there is no limitation as long as the surface can be made hydrophilic regardless of the type of the introduced gas.

The electrolyte layer 10 is configured by including at least bis(trifluoromethanesulfonyl)imide or a (trifluoromethanesulfonyl)imide salt. As the (trifluoromethanesulfonyl)imide salt, any one or more of lithium bis(trifluoromethanesulfonyl)imide, potassium bis(trifluoromethanesulfonyl)imide, and sodium bis(trifluoromethanesulfonyl)imide can be selected. In addition, the electrolyte layer 10 includes any one or more of organic solvents of propylene carbonate, ethylene carbonate, and diethyl carbonate, and further includes any one or more of an acrylic resin and an epoxy resin, whereby solidification may be performed by heat or/and ultraviolet irradiation. The electrolyte layer 10 may or may not be transparent.

The ECD is driven by applying a voltage between electrodes including the two transparent electrode layers 14a and 14b. That is, a color change between a state 1 in which the first EC layer 12a is in an oxidized state and the second EC layer 12b is in a reduced state and a state 2 in which the first EC layer 12a is in a reduced state and the second EC layer 12b is in an oxidized state can be operated by voltage application. For example, a voltage of -0.7 to -3.0 V is applied in the case of the state 1, and a voltage of 1.0 to 3.0 V is applied in the case of the state 2.

For example, when tungsten oxide is used for the first EC layer 12a, an iron-iron cyanide complex is used for the second EC layer 12b, and a transparent material is used for the electrolyte layer 10, a color change from dark blue to colorless and transparent is exhibited as the ECD. Tungsten oxide and the iron-iron cyanide complex are almost colorless and transparent in an oxidized state and a reduced state, respectively. Therefore, the ECD becomes colorless and transparent in the state 1. In addition, tungsten oxide is colored blue in the reduced state and the iron-iron cyanide complex is colored blue in the oxidized state. Therefore, the ECD exhibits a dark blue color in the state 2. Therefore, the ECD exhibits a dark blue color in the state 2.

In an example of the method for manufacturing the entire electrochromic element according to the present embodiment, first, the first transparent electrode layer 14a is formed on the first transparent substrate 16a and the second transparent electrode layer 14b is formed on the second transparent substrate 16b by the above-described electrode formation step, and then the first EC layer 12a is formed on the first transparent electrode layer 14a and the second EC layer 12b is formed on the second transparent electrode layer 14b. Then, the electrolyte layer 10 is formed on the first EC layer 12a or the second EC layer 12b using, for example, a dispenser, and then the laminate on the first transparent substrate 16a side and the laminate on the second transparent substrate 16b side are pressed and bonded to each other, thereby providing an electrochromic element. In the manufacturing method of the present invention, various steps other than the electrode formation step can be performed by any known technique.

The method for manufacturing an electrochromic element according to the present embodiment preferably includes a light aging treatment step of forming a multilayer structure including a first electrochromic layer, an electrolyte layer, and a second electrochromic layer in this order between the first transparent electrode layer on the first transparent substrate and the second transparent electrode layer on the second transparent substrate, and then irradiating the multilayer structure with light.

The light aging treatment step is a step of irradiating the formed multilayer structure with light in a predetermined wavelength region. For example, a light irradiation apparatus that emits light having a wavelength range of 180 nm or more and 750 nm or less, preferably 180 nm or more and 380 nm or less is used in the light aging treatment step.

Herein, when the storage time becomes long after the formation of the multilayer structure, the bleached-state transmittance in a specific wavelength region (approximately 700 to 1000 nm) may gradually decrease. Performing the light aging treatment step makes it possible to increase the lowered bleached-state transmittance.

### Examples

Hereinafter, the present invention will be described in more detail with reference to Examples, but the present invention is not limited to these Examples.

### [Transparent electrode layer (first transparent electrode layer, second transparent electrode layer)]

Herein, in the high frequency magnetron sputtering method, a transparent electrode film of indium oxide having an amorphous phase was formed on a glass substrate of 30 × 30 mm in an atmosphere including water vapor, oxygen, and argon using a sintered body of indium oxide (indium oxide alone) as a target. The substrate was not heated, and a film was formed at room temperature, and the amount of water vapor introduced was set to 1 × 10⁻⁴ Pa. The obtained film thickness was about 120 nm.

Thereafter, the film was crystallized by heat treatment at 200°C for 30 minutes in vacuum to form a transparent electrode film of indium oxide in a crystalline state. Hereinafter, the indium oxide transparent electrode film is referred to as an IOH film, and in particular, when the transparent electrode film in the amorphous state and the transparent electrode film in the crystalline state are distinguished from each other, they are referred to as an a-IOH film and a c-IOH film, respectively. In addition, a conventional ITO film is prepared, and hereinafter, the transparent electrode film of indium oxide is described as an ITO film with respect to the IOH film. The c-IOH film corresponds to an Example, and the a-IOH film and the ITO film correspond to a comparative example.

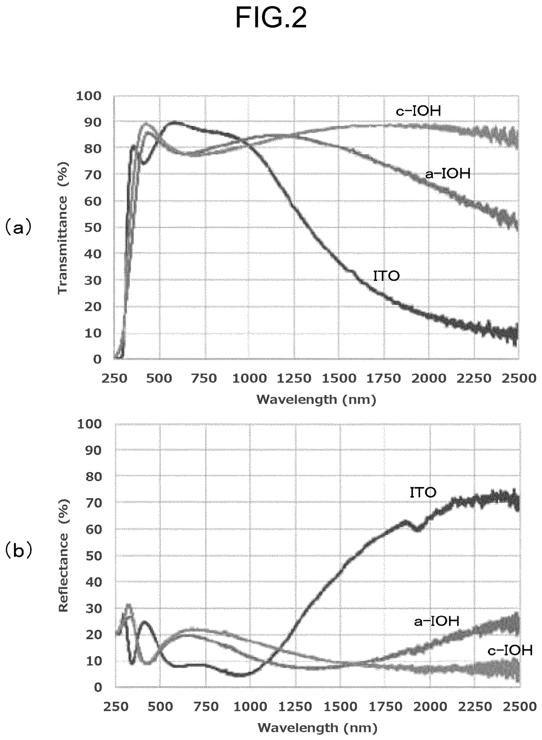

Fig. 2 shows spectral spectra of the IOH film and the ITO film. It has been found that the IOH film has a high transmittance of 50% or more in the near-infrared band (wavelength of 800 to 2500 nm) and has a low reflectance as compared with the ITO film. In particular, in the c-IOH film, the solar transmittance ranges from 79 to 85%, which is approximately 80% or more over the entire near-infrared band, and a change width of the transmittance of 60% or more can be obtained.

While the carrier mobility of the ITO film was 38 cm²/V·s, the carrier mobility of IOH was 30 cm²/V·s for the a-IOH film and 124 cm²/V·s for the c-IOH film. Commonly, when the carrier mobility is 70 cm²/V·s or more, sufficient transmittance of infrared rays can be expected for various applications to an electrochromic element. The transmittance was measured with an ultraviolet-visible near infrared spectrophotometer. The carrier mobility was measured by Hall effect measurement using a specific resistance/Hall measurement system (ResiTest 8300 manufactured by TOYO Corporation).

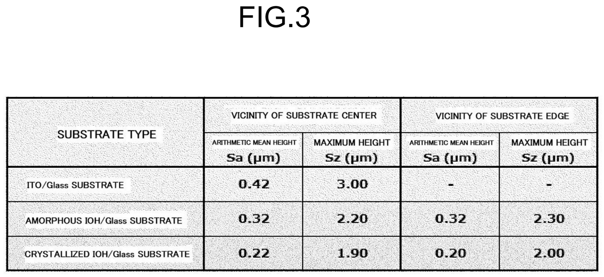

Fig. 3 shows the results of measuring the surface shapes of the IOH film and the ITO film. The IOH film was smoother compared to the ITO film, and the c-IOH film was smoother than the a-IOH film.

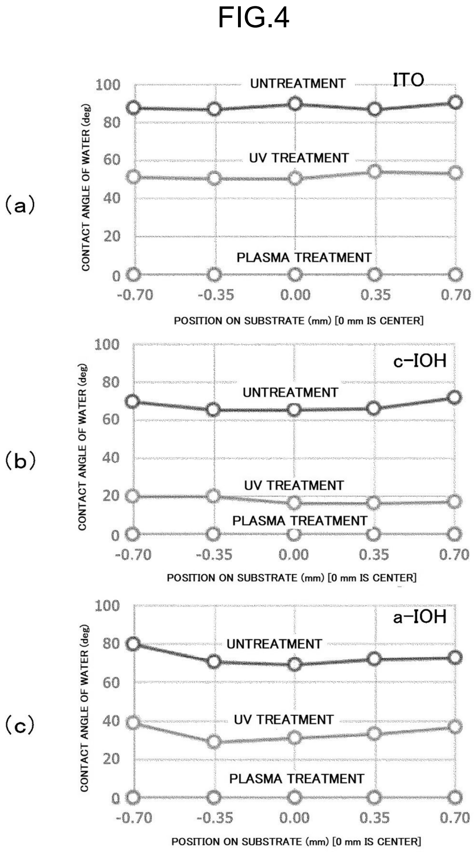

Fig. 4 shows the water contact angle of the IOH film and the ITO film with the surfaces thereof hydrophilized by plasma irradiation (plasma treatment) or ultraviolet irradiation (UV treatment) together with the measurement value in the untreated state before the treatment. The EC layer is formed on the transparent electrode layer using a wet process, and thus the wettability of the surface is one of significantly important parameters in the manufacturing process. The plasma treatment was performed for 3 minutes using a plasma cleaner manufactured by Harrick Plasma, Inc. The UV treatment was performed for 1 minute using a UV-LED light source having a wavelength of 365 nm. The arithmetic mean height (Sa) and the maximum height (Sz) were calculated with a laser displacement meter using a white-light interferometry. As is found from Fig. 4, in particular, in the surface modification by the UV treatment (ultraviolet irradiation), c-IOH had the smallest contact angle. In the surface modification by the plasma treatment, the measurement limit of the dynamic contact angle by the contact angle meter was exceeded, and thus the water contact angle was 0°.

### [EC layer on transparent electrode layer]

Various characteristics in a state where the first EC layer is provided on the first transparent electrode layer and the second EC layer is provided on the second transparent electrode layer will be described.

### <First EC layer>

A thin film composed of tungsten oxide was formed as the first EC layer on the coated glass substrate (corresponding to the first transparent substrate and the first transparent electrode layer) provided with the IOH film (multilayer film A).

Herein, 75 µL of the tungsten oxide nanoparticle dispersion was weighed with a micropipette, and dropped onto a coated glass substrate coated with a 30 × 30 mm IOH film provided in a spin coater, and rotation was performed at 200 rpm for 600 seconds, and then at 1600 rpm for 10 seconds to form a thin film. The obtained film thickness was approximately 600 nm (multilayer film A). Hereinafter, the tungsten oxide thin film is referred to as a WO₃ thin film.

From the viewpoint of high efficiency of film formation, the method for fabricating a tungsten oxide thin film by a tungsten oxide nanoparticle dispersion as described above is excellent, but is not limited as long as the oxidation-reduction reaction can occur so as to be suitable for ECD, and a sol-gel method using tungsten chloride, metal tungsten, or the like and a vacuum process such as a vapor deposition method or a sputtering method that is a simple physical process can be used.

### <Second EC layer>

On the coated glass substrate provided with the IOH film (corresponding to the second transparent substrate and the second transparent electrode layer), a thin film of a metal cyanide complex was formed as an EC layer (multilayer film B).

Herein, 30 mL of an aqueous solution obtained by dissolving 16.2 g of iron nitrate·9 hydrate in water was mixed with an aqueous solution obtained by dissolving 14.5 g of sodium ferrocyanide·10 hydrate in 60 mL of water, and the mixture was stirred for 5 minutes. The precipitated precipitate of Prussian blue, which is a blue iron-iron cyanide complex, was centrifuged, washed three times with water, followed by one time with methanol, and dried under reduced pressure to obtain a sample AFe1. The yield in this case was 11.0 g, and the yield was 97.4% as Fe[Fe(CN)₆]_{0.75}·3.75H₂O. The precipitate of the fabricated iron-iron cyanide complex was analyzed with a powder X-ray diffractometer, and the result was consistent with the diffraction information of Fe₄[Fe(CN)₆]₃, which is Prussian blue, retrieved from the standard sample database. As a result of measurement with a transmission electron microscope, sample AFe1 was an aggregate of nanoparticles having a diameter of 5 to 20 nm.

Then, 0.40 g of the sample AFe1 obtained above was suspended in 8 mL of water. 80 mg of sodium ferrocyanide decahydrate was added to this suspension, and the mixture was stirred to turn into a blue transparent solution. As described above, a dispersion of an iron-iron cyanide complex was obtained. This dispersion was subjected to a spin coating method on a coated glass substrate of an IOH layer of 30 × 30 mm to form an iron-iron cyanide complex thin film. More specifically, 75 µL of the dispersion adjusted to 9 wt% was dropped, rotation was performed at 800 rpm for 10 seconds, and then rotation was performed at 1600 rpm for 10 seconds to form an iron-iron cyanide complex thin film on the coated glass substrate provided with the IOH film. The obtained film thickness is approximately 1000 nm (multilayer film B). Herein, the iron-iron cyanide complex thin film is referred to as a PB thin film. Also for the ITO film, a multilayer film A and a multilayer film B were obtained by the same method as the IOH film.

### <Various characteristics of first EC layer and second EC layer>

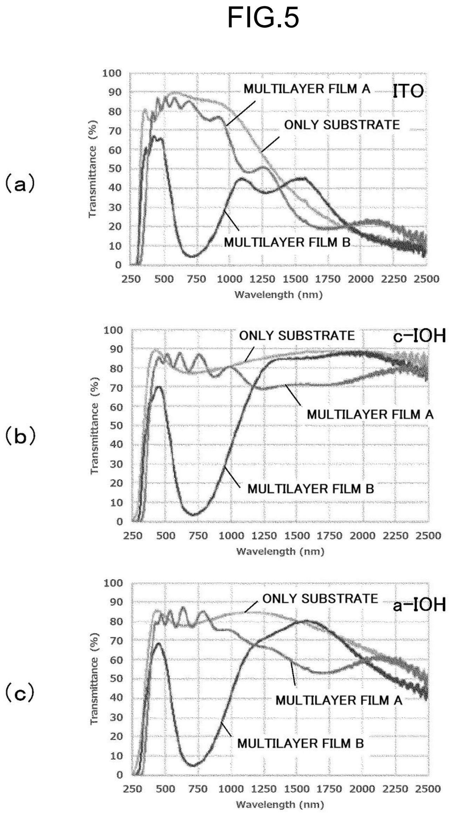

Fig. 5 shows spectral spectra of the multilayer films A and B described above for the ITO film, the c-IOH film, and the a-IOH film, and a coated glass substrate coated with only a transparent electrode layer for comparison. In both the multilayer film A (including the WO₃ thin film) and the multilayer film B (including the PB thin film), the transmittance in the near-infrared band was affected by the transmittance of the coated glass substrate coated with the transparent electrode layer. Therefore, the multilayer film A (including the WO₃ thin film) using the c-IOH-coated glass substrate excellent in transmittance in the near-infrared band showed a high transmittance of 70% or more at a wavelength of 1300 to 2500 nm, and the multilayer film B (including the PB thin film) showed a high transmittance of approximately 80% or more in the same wavelength range.

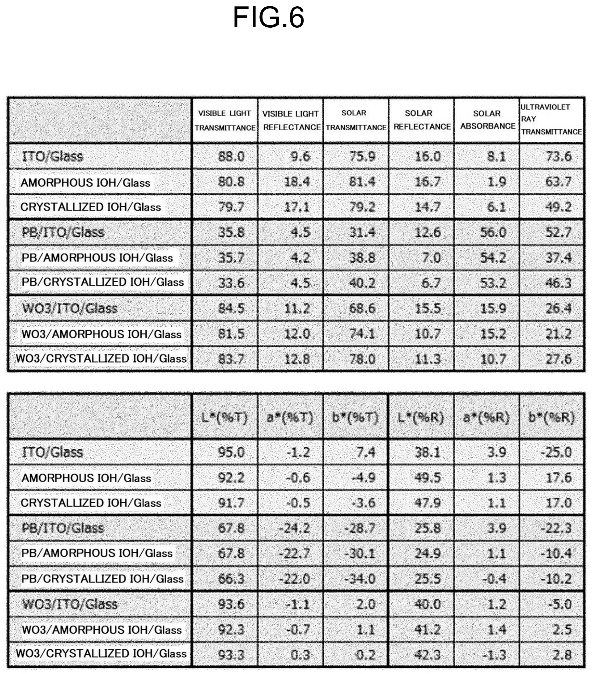

Fig. 6 summarizes the results of measuring the transmittance spectrum and the like of the ECD obtained by combining the first EC layer and the second EC layer.

As described above, the ECD was fabricated by clamping the electrolyte layer between the transparent electrode layer-coated glass substrate on which the WO₃ thin film was formed and the transparent electrode layer-coated glass substrate on which the PB thin film was formed with each glass substrate facing outward. As the electrolyte of the electrolyte layer, an acrylic resin was added to a potassium bis(trifluoromethanesulfonyl)imide (KTFSI)-propylene carbonate solution having a concentration of 0.5 mol/L to make 0.06 ml, and the electrolyte was solidified by irradiation with ultraviolet rays to form an all-solid-state element.

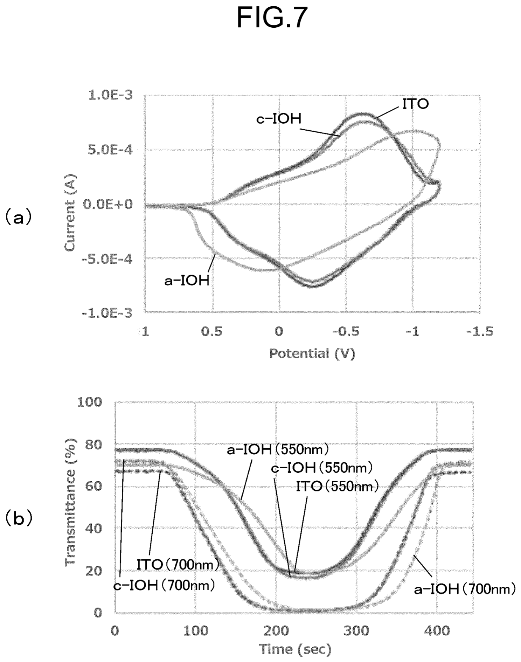

Fig. 7(a) shows a result of measuring a cyclic voltammogram (CV) of the ECD at a scan rate of 5 millivolt/second when each transparent electrode layer was used, and Fig. 7(b) shows a temporal change in transmittance regarding a color change reaction. The CV curve of the element using c-IOH (crystallinity) almost overlapped with the curve when the existing ITO substrate was used, but in the element using a-IOH (amorphous), the applied voltage timing at which the peak current accompanying the color change reaction occurred was delayed. That is, it is determined that c-IOH is more suitable as the transparent electrode layer used for the element.

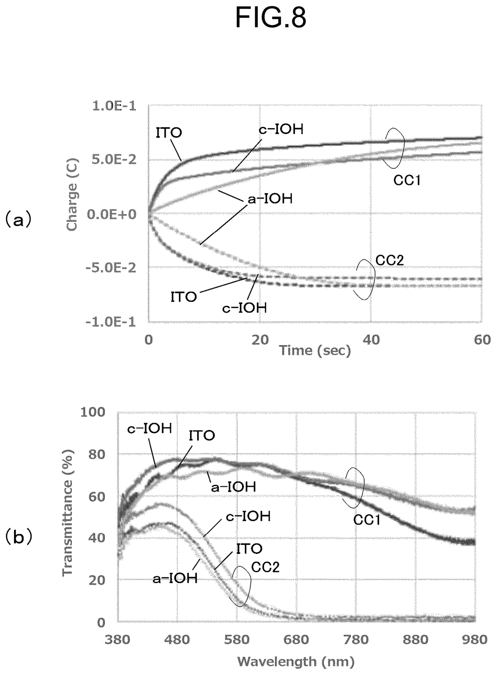

In Fig. 8(a), the electrochemical characteristics of the ECD were measured by chronocoulometry (CC). The measurement conditions are CC1 (+1.0 V → -1.2 V × 60 seconds) and CC2 (-1.2 V → +1.0 V × 60 seconds). Fig. 8(b) shows the result of measuring the transmittance at 60 seconds in Fig. 8(a). The element using a-IOH is clearly found to have a low charge progress speed.

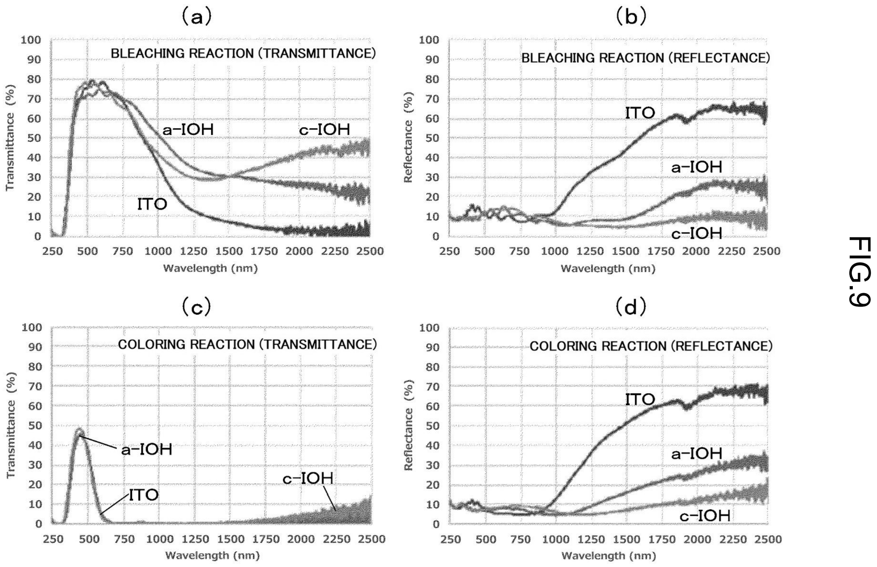

Fig. 9 shows optical spectra of the ECD when each transparent electrode layer is used, for (a) bleached-state transmittance, (b) bleached-state reflectance, (c) colored-state transmittance, and (d) colored-state reflectance. All ECDs were in a bleached-state by application of a voltage of +1 V, and were in a colored state by application of a voltage of -1.2 V. The optical characteristics are changed. Herein, the measurement was performed on the day of assembling the element, and the bleached-state transmittance of the element using c-IOH and the element using a-IOH was approximately 30% in the wavelength band of approximately 1300 nm, and was not so large as compared with the element using the ITO film. In contrast, the colored-state transmittance was hardly different in the band of the wavelength of 250 to 1500 nm, but the transmittance of the element using the IOH film tended to be high at the wavelength of 1500 nm or more. These results show that c-IOH, a-IOH, and ITO are excellent in this order from the visible light region to the near-infrared region.

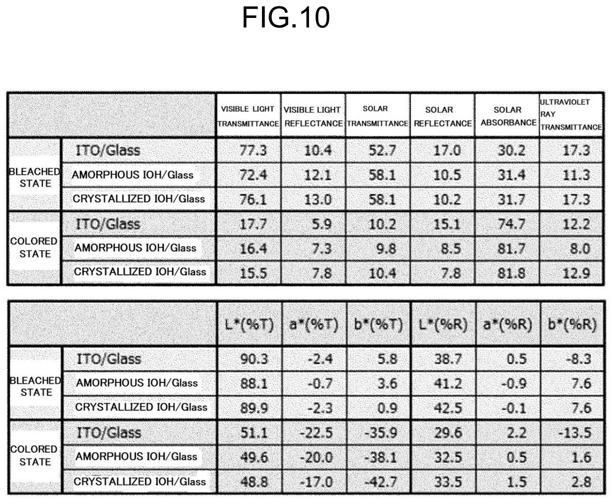

Fig. 10 summarizes the relevant optical characteristics calculated from Fig. 9.

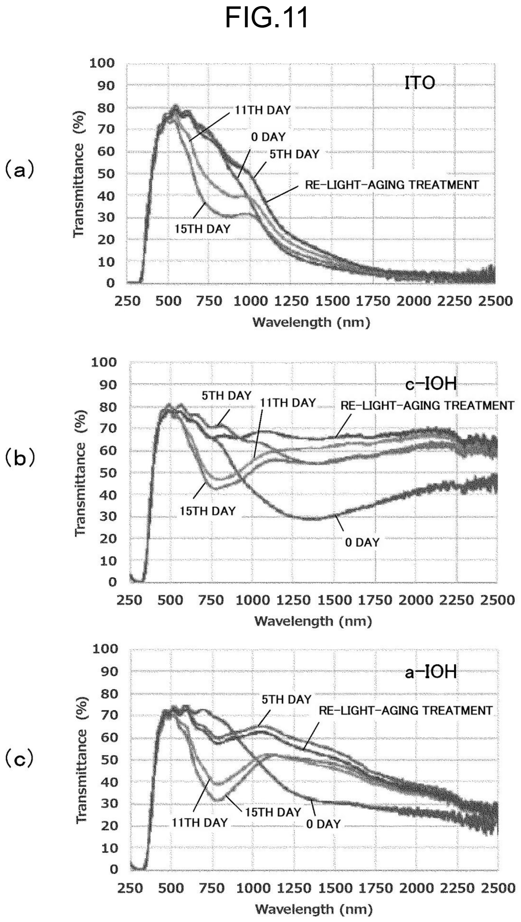

Fig. 11 shows the result of temporal change in optical spectral change of an ECD fabricated by including each transparent electrode layer of (a) ITO, (b) c-IOH, and (c) a-IOH. The voltage application conditions are similar to those in Fig. 9. In each element, the bleached-state transmittance in the band of approximately 700 to 1000 nm gradually decreases with the lapse of time of indoor storage. Such a decrease is almost recovered by performing a light aging treatment (irradiation with pseudo sunlight or UV light for several minutes). In Examples, light aging treatment was performed by irradiating light using a xenon weather meter that emits light approximate to full spectrum natural sunlight. In addition, in (b) c-IOH and (c) a-IOH, the bleached-state transmittance was initially as low as approximately 20 to 30% in the wavelength band of 1000 nm or more, but increased to 60% or more due to aging with time. Similarly, the bleached-state transmittance can be increased by the re-light-aging treatment. That is, stable operation is expected by performing the light aging treatment in the manufacturing process.

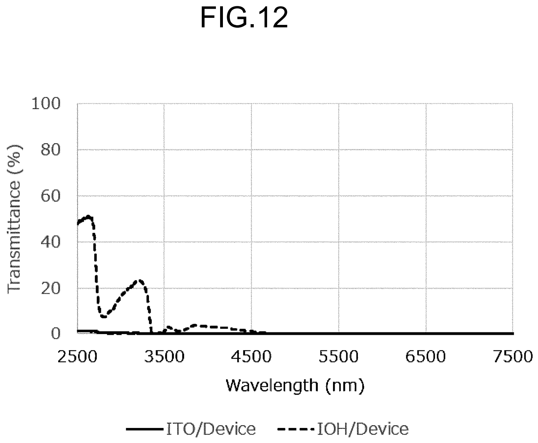

Fig. 12 shows optical characteristics (bleached-state transmittance) in a mid-infrared band of the ECD measured using Fourier transform infrared spectroscopy. In an element using an ITO film, light hardly passes in the mid-infrared band, but transmittance can be maintained in an element using an IOH film. Using the IOH film in this manner makes it possible to switch the optical characteristics up to the mid-infrared band to provide a color change.

As described above, in the present invention, the optical characteristics can be made variable in the near-infrared to mid-infrared band (800 to 4000 nm), and in particular, it is possible to achieve an electrochromic element that performs high-contrast coloring and bleaching with a large transmittance change width in the near-infrared band (800 to 2500 nm). Such an element is assumed to be used for a light control device such as a light control glass, a display, and a display element, and particularly, the ability to control a long-wavelength component is improved as compared with existing technologies, and thus, it is expected to be used as an energy saving light control device member that optimizes the inflow amount of infrared rays or the like that is a heat component of solar energy, such as an automobile window glass and a building material window glass.

The Examples according to the present invention have been described above, and the present invention is not necessarily limited thereto, and those skilled in the art will be able to find various alternative examples and modifications without departing from the gist of the present invention or the appended claims.

### Reference Signs List

- 1: Electrochromic element (ECD)
- 10: Electrolyte layer
- 12a: First electrochromic (EC) layer
- 12b: Second electrochromic (EC) layer
- 14a: First transparent electrode layer
- 14b: Second transparent electrode layer
- 16a: First transparent substrate
- 16b: Second transparent substrate

## Claims

1. An electrochromic element for a light control device, comprising a multilayer structure including: a first electrochromic layer; an electrolyte layer; and a second electrochromic layer, in this order between a first transparent electrode layer on a first transparent substrate and a second transparent electrode layer on a second transparent substrate, wherein
the first transparent electrode layer and the second transparent electrode layer include at least one of a single-component oxide of indium (In) and an oxide of indium (In) including one or multiple types selected from the group consisting of Ce, W, Ti, Zr, and Mo, and have a carrier mobility of 70 cm²/V·s or more and a transmittance of 75% or more in a near-infrared band (800 to 2500 nm).

2. The electrochromic element for a light control device according to claim 1, wherein the first transparent electrode layer and the second transparent electrode layer include a crystal phase obtained by crystallizing an amorphous phase.

3. The electrochromic element for a light control device according to claim 2, wherein the first transparent substrate and the second transparent substrate are resin sheets.

4. The electrochromic element for a light control device according to one of claims 1 to 3, wherein
the electrolyte layer includes any one or more of bis(trifluoromethanesulfonyl)imide, lithium bis(trifluoromethanesulfonyl)imide, potassium bis(trifluoromethanesulfonyl)imide, and sodium bis(trifluoromethanesulfonyl)imide, and one or more organic solvents of propylene carbonate, ethylene carbonate, and diethyl carbonate, and is solidified with any one or more of an acrylic resin and an epoxy resin, the first electrochromic layer includes a transition metal oxide, the second electrochromic layer includes a metal cyanide complex, and
application of a voltage to the first transparent electrode layer and the second transparent electrode layer allows color change.

5. The electrochromic element for a light control device according to claim 4, wherein the transition metal oxide includes at least one of tungsten oxide, molybdenum oxide, niobium oxide, vanadium oxide, and titanium oxide.

6. The electrochromic element for a light control device according to claim 4, wherein the metal cyanide complex is a Prussian blue type metal complex composed of one or more selected from a group represented by a general formula:
AₓM[M'(CN)₆]_{y}·zH₂O
wherein A is a cation composed of an atom selected from the group consisting of hydrogen, lithium, sodium, potassium, rubidium, cesium, and ammonium,
M is a metal atom selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium,
M' is a metal atom selected from the group consisting of vanadium, chromium, molybdenum, tungsten, manganese, iron, ruthenium, cobalt, nickel, platinum, and copper,
x is a rational number of 0 to 3, y is a rational number of 0.3 to 1.5, and z is a rational number of 0 to 30.

7. A transparent electrode layer used in an electrochromic element for a light control device, wherein
the transparent electrode layer is formed on a transparent substrate,
the transparent electrode layer includes at least one of a single-component oxide of indium (In) and an oxide of indium (In) including one or multiple types selected from the group consisting of Ce, W, Ti, Zr, and Mo, and has a carrier mobility of 70 cm²/V·s or more and a transmittance of 75% or more in a near-infrared band (800 to 2500 nm).

8. A method for manufacturing an electrochromic element for a light control device, the electrochromic element comprising a multilayer structure including: a first electrochromic layer; an electrolyte layer; and a second electrochromic layer, in this order between a first transparent electrode layer on a first transparent substrate and a second transparent electrode layer on a second transparent substrate, the method including:
a step of forming the first transparent electrode layer on the first transparent substrate and/or an electrode formation step of forming the second transparent electrode layer on the second transparent substrate, wherein
the electrode formation step includes:
a first step of forming a precursor film including an amorphous phase including at least one of a single-component oxide of indium (In) and an oxide of indium (In) including one or multiple types selected from Ce, W, Ti, Zr, and Mo on the first transparent substrate and/or the second transparent substrate; and
a second step of crystallizing the precursor film to form the first transparent electrode layer and/or the second transparent electrode layer having a carrier mobility of 70 cm²/V·s or more and a transmittance of 75% or more in a near-infrared band (800 to 2500 nm).

9. The method for manufacturing an electrochromic element for a light control device according to claim 8, wherein the second step includes a step of irradiating the precursor film with light.

10. The method for manufacturing an electrochromic element for a light control device according to claim 9, wherein the second step is a step of performing treatment at a temperature of 100°C or less.

11. The method for manufacturing an electrochromic element for a light control device according to claim 9 or 10, wherein the first transparent substrate and the second transparent substrate are resin sheets.

12. The method for manufacturing an electrochromic element for a light control device according to claim 8, wherein
the electrolyte layer includes any one or more of bis(trifluoromethanesulfonyl)imide, lithium bis(trifluoromethanesulfonyl)imide, potassium bis(trifluoromethanesulfonyl)imide, and sodium bis(trifluoromethanesulfonyl)imide, and one or more organic solvents of propylene carbonate, ethylene carbonate, and diethyl carbonate, and is solidified with any one or more of an acrylic resin and an epoxy resin, the first electrochromic layer includes a transition metal oxide, the second electrochromic layer includes a metal cyanide complex, and
the electrochromic element for a light control device allows color change by application of a voltage to the first transparent electrode layer and the second transparent electrode layer.

13. The method for manufacturing an electrochromic element for a light control device according to claim 8, the method comprising a light aging treatment step of forming the multilayer structure and then performing light irradiation.

14. A method for manufacturing a transparent electrode layer used in an electrochromic element for a light control device, the method comprising:
an electrode formation step of forming a transparent electrode layer on a transparent substrate, wherein
the electrode formation step includes:
a first step of forming, on the transparent substrate, a precursor film having an amorphous phase including at least one of a single-component oxide of indium (In) and an oxide of indium (In) including one or multiple types selected from the group consisting of Ce, W, Ti, Zr, and Mo; and
a second step of crystallizing the precursor film to form the transparent electrode layer having a carrier mobility of 70 cm²/V·s or more and a transmittance of 75% or more in a near-infrared band (800 to 2500 nm).
